Europäisches Patentamt

(19) European Patent Office

Office européen des brevets

(11) Numéro de publication: **0 265 303**
**B1**

(12) FASCICULE DE BREVET EUROPEEN

(45) Date de publication du fascicule du brevet:
21.03.90

(51) Int. Cl.⁴: **C02F 3/30,** C02F 3/06, C02F 3/10

(21) Numéro de dépôt: 87402064.7

(22) Date de dépôt: 16.09.87

(54) **Procédé de purification, par voie biologique, d'eaux résiduaires sur lit de matériau granulaire.**

(30) Priorité: 01.10.86 FR 8613675

(43) Date de publication de la demande:
27.04.88 Bulletin 88/17

(45) Mention de la délivrance du brevet:
21.03.90 Bulletin 90/12

(84) Etats contractants désignés:
BE CH DE ES GB IT LI SE

(56) Documents cités:
EP-A- 0 116 497
EP-A- 0 193 979
FR-A- 2 235 089
GB-A- 1 580 733

JOURNAL OF THE WATER POLLUTION CONTROL FEDERATION,
vol. 56, no. 3, partie 1, mars 1984, pages 251-258, Washington, D.C., US; Y. IIDA et al.: "Nitrogen removal from municipal wastewater by a single submerged filter"

(73) Titulaire: OTV OMNIUM de TRAITEMENTS et de VALORISATION, Le Doublon 11 avenue Dubonnet, F-92407 Courbevoie(FR)

(72) Inventeur: Desbos, Gilbert, 9, rue Laffitte, F-78600 Maisons Laffitte(FR)

(74) Mandataire: Cuer, André, CABINET CUER 30, rue de Léningrad, F-75008 Paris(FR)

## Description

La présente invention a trait au domaine de l'épuration, par voie biologique, des eaux résiduaires telles que notamment les eaux urbaines. les eaux industrielles et, éventuellement, les eaux de distribution à rendre potables.

On sait que le traitement biologique, par exemple de l'eau, consiste à dégrader les impuretés organiques par l'action d'une biomasse épuratrice libre ou fixée, et renfermant des microorganismes divers : bactéries, levures, protozoaires, métazoaires... Dans le procédé à biomasse libre, par boues activées, il y a impossibilité de concentrer en grand nombre les diverses espèces de microorganismes, peu décantables dans la mesure où la concentration de la biomasse est réalisée par décantation ; le procédé est donc limité pour ce qui est de la charge applicable en DBO (demande biologique en oxygène) et DCO (demande chimique en oxygène). Dans un système à biomasse fixée, la concentration de la biomasse (avec les bactéries) se fait par l'accrochage sur un support. L'aptitude à la décantation n'est plus alors le critère primordial et cette technique possède un potentiel épuratoire bien supérieure à celui des procédés conventionnels.

L'invention se situe dans ce domaine de l'épuration biologique à biomasse fixée, avantageusement avec un lit granulaire fixe dans un réacteur biologique jouant ainsi un rôle de filtration pour retenir les boues en excès produites à l'intérieur même du réacteur ainsi que les matières de suspension présentes dans l'effluent à traiter. Le réacteur est lavé périodiquement pour éliminer les boues en excès et les matières en suspension qui s'accumulent.

Parmi les procédés les plus performants, basés sur ce principe d'épuration à biomasse fixée, on rappelera ici le procédé dit "Biocarbone" (marque déposée) développé par la Demanderesse et qui consiste essentiellement à faire percoler de haut en bas l'eau à traiter à travers un lit submergé et fixe de matériau filtrant granulaire avec une insufflation de courant gazeux oxygéné à un niveau intermédiaire du lit, ceci dans des conditions bien déterminées et critiques de débit d'eau, débit de gaz ogygéné, nature et constitution du lit, quantité de pollution à éliminer (voir par exemple les brevets français FR-A 2 358 362 FR-A 2 439 749 ; ainsi que leurs correspondants à l'étranger).

L'un des buts de l'invention vise la mise au point d'un procédé, inspiré de la technique susvisée de filtre aéré dans la masse granuleuse, capable de traiter directement, après un simple dégrillage une eau usée brute sans nécessité d'opération préliminaire de décantation primaire.

Un autre but, visé par l'invention et parmi d'autres qui apparaitront au cours de la description, concerne la réalisation d'économies en gaz oxygéné d'aération et en volume d'eau nécessaire au lavage du filtre, tout en gardant la possibilité de traiter, avec une grande efficacité, des eaux contenant de fortes charges de pollution, par exemple d'au moins 15 kg de DCO/m3 de lit/jour.

L'invention a donc trait à un procédé pour la purification, par voie biologique, d'eaux résiduaires selon le principe du lit immergé et fixe de matériaux granulaires avec aération au moins partielle de la biomasse et injection de l'eau à traiter de bas en haut à travers la masse de matériaux granulaire, caractérisé en ce que l'on opère dans un seul réacteur de filtration comprenant une zone inférieure d'anaérobie et une zone supérieure aérobie, séparées par une injection de gaz oxygéné, le filtre comprenant de bas en haut: une première couche de granulométrie entre 20 et 60 mm sur une hauteur d'au moins 15 cm, une deuxième couche de granulométrie entre 6 et 10 mm sur une hauteur d'au moins 40 cm, et une couche supérieure de granulométrie entre 1 et 4 mm sur une hauteur d'au moins 50 cm.

Dans la description qui suit, on entendra par zone "anaérobie" une région dépourvue d'oxygène libre et qui sera alimentée par un affluent d'eau à traiter, dépourvue de nitrate, cette zone pouvant être dénommée : "acidogène" lorsque les molécules hydrocarbonées contenues dans l'affluent s        ont transformées en acides gras.

Lorsqu'on examine de près l'art antérieur connu, on trouve, certes, des descriptions de procédés dans lesquels sont évoquées, souvent à titre de variantes, des mesures telles que : injection ascendante d'eau dans un ou plusieurs lits fixes, introduction d'air en plusieurs points du lit, utilisation d'une zone anaérobie pour la filtration... mais, en aucun cas, on n'a suggéré ou décrit une technique combinant les paramètres et phases opératoires critiques, dans un seul réacteur, telles qu'elles sont envisagées par la présente invention.

Le matériaux granulaire, ou produit filtrant, pour être constitué par des cailloux ou, par exemple, par l'un des produits suivants ou leur mélange : shistes, argiles, charbon actif, sable, matériaux plastiques expansés, les densités de ces produits (ou d'une partie d'entre eux) pouvant être supérieures ou inférieures à celles de l'eau.

Selon un mode de réalisation du procédé général, le matériau granulaire comprend, outre une couche inférieure de cailloux d'une hauteur de 20 à 40 cm servant de support, au moins l'un des produits choisis dans le groupe constitué par: schistes, argiles, charbon actif, sable, matériaux platiques expansés, les densités desdits produits pouvant être supérieures ou inférieures à celles de l'eau.

En pratique, les hauteurs moyennes des couches, par exemple lorsqu'on en utilise trois comme ci-dessus, varient le plus souvent : entre 25 et 40 cm pour la couche inférieure, entre 65 et 85 cm pour la couche intermédiaire et entre 60 cm et 2 m pour la couche supérieure fine, ceci pour un réacteur d'environ 3,5 m.

Dans la gradation des diamètres de particules, telle que définie ci-dessus, et d'une façon générale pour la bonne marche du procédé, les interstices des grains choisis pour les couches inférieures évitent la pénétration de grains de la couche supérieure. En cours d'épuration en lit fixe, il ne se produit donc pas de mélange des couches de matériaux granulaires et l'on peut ainsi maintenir, selon un but essentiel de l'invention, deux populations biologiques superposées dont les effets différents, respectivement caractéristiques d'un milieu aérobie et d'un milieu anaérobie deviennent alors complémentaires en matière d'épuration.

Grâce à la préfiltration, selon l'invention, dans la zone basse anaérobie, dite également acidogène, où les matières organiques complexes de l'eau brute sont transformées en acides gras volatils, on obtient une série d'avantages parmi lesquels il faut mentionner en particulier :

- une appréciable économie sur l'apport d'oxygène nécessaire à la filtration aérée dans la zone supérieure aérobie où se termine l'épuration ;
- un abattement important de la DCO d'origine, pouvant atteindre 40 à 50 % (en poids) ainsi qu'une bonne rétention des matières en suspension ;
- une cinétique d'oxydation biologique, dans la zone de filtration aérée, sensiblement plus rapide, du fait de la transformation préalable des pollutions organiques dans la zone acidogène ; d'où la possibilité, comme déjà dit ci-dessus, d'admettre des charges appliquées de DCO très importantes, par exemple jusqu'à 30 kg/m$^3$ de lit/jour, grâce à la superposition en un seul ouvrage, selon l'invention, des deux filtrations biologiques successives selon les deux zones bien distinctes.

On notera, à cet égard, que la phase ultime de la méthanisation (transformation des acides gras en méthane) par bactéries méthanogènes, classiques dans un traitement simple en anaérobie, est ici remplacée, partiellement ou totalement, par une épuration aérobie et transformation des acides gras et molécules organiques plus simples en $CO_2$.

Selon l'invention le gaz oxygéné, comme par exemple de l'air éventuellement enrichi en oxygène, est injecté au niveau que l'on a choisi comme limite supérieure de la zone anaérobie. En pratique, dans le cas susvisé des lits multicouches, le point d'injection peut correspondre sensiblement au tiers inférieur ou à la moitié de la hauteur totale du lit granulaire. Cet air, dont la vitesse est généralement maintenu entre 5 et 40m/h lorsque le courant de fluide gazeux est continu, peut d'une part être réparti en plusieurs points dans la zone supérieure aérobie et d'autre part être injecté de façon intermittente, selon les cadences choisies par l'homme de l'art en fonction de la pollution de l'eau traitée. En pratique les quantités d'air varient généralement entre 10 et 40Nm$^3$/h/kg de DBO appliquée. Par ailleurs, conformément à une variante utilisable dans le cadre du procédé de l'invention, on peut envoyer par intermittence du gaz oxygéné, juste avant la purge évacuant la biomasse en excés par le bas du filtre en vue de réduire, si désiré, le taux de phosphore dans l'effluent traité.

L'eau traitée selon l'invention est normalement évacuée par surverse en haut du réacteur. Toutefois, il est possible de la soutirer, au moins en partie, légèrement en-dessous du niveau supérieure du lit filtrant.

Le lavage des filtres s'effectue généralement par envoi simultané d'air et eau (à vitesses de 25 à 100 m/h) puis un rinçage par l'eau seule à vitesse de 20 à 120 m/h. En outre, il est capital en cours de traitement, d'éliminer en partie la biomasse retenue dans les couches basses du filtre par des chasses programmés, de haut en bas, au moyen de l'eau contenue dans le lit filtrant de manière à maintenir optimale la quantité de biomasse active dans le filtre en fonction de la pollution contenue dans l'affluent à traiter.

Dans certains cas, il peut être avantageux de prévoir l'ajout d'une petite quantité d'agent coagulant à l'eau brute avant son introduction ascendante dans les deux zones de filtration. On peut à cet effet utiliser l'un quelconque des produits connus tels que sulfate d'alumine, sel ferrique, polymères organiques.

D'autres détails et paramètres opératoires apparaîtront dans la description qui suit, relative à des exemples non limitatifs de réalisation et d'illustration d'un dispositif de mise en oeuvre.

Exemples d'exécution :

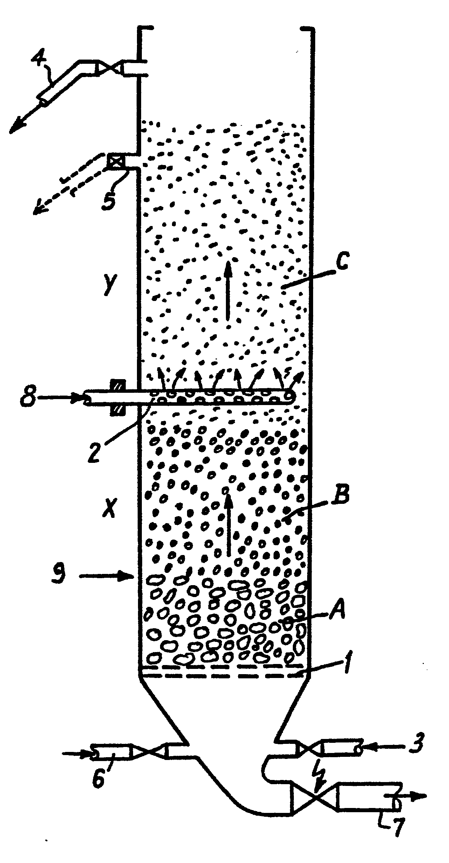

Pour les nombreux essais effectués dont quelques-uns, illustratifs, seront décrits ci-après, on a utilisé un réacteur pilote de forme tubulaire de diamètre 45 cm et de 3,60 m environ de hauteur, dont le schéma simplifié est représenté sur la figure 1 (unique) annexée.

Le lit granulaire de filtration était constitué successivement, de bas en haut, au-dessus de la grille-support 1 par : une première couche A de cailloux de 30 à 40 mm de diamètre et d'une hauteur d'environ 30 cm ; une deuxième couche B de graviers de diamètre 6 à 8 mm et de hauteur 70 cm environ ; et une troisième couche C de shiste expansé de diamètre de grains 2 à 5 mm et de hauteur : 1 m environ.

Le gaz oxygéné, ici de l'air, était envoyé par la raquette perforée 2 à un niveau déterminé comme limite supérieure de la zone anaérobie, la zone aérobie Y étant bien entendu située au-dessus de la raquette 2. Dans le présent cas, l'injection d'air était effectuée à environ 1 mètre du fond 1 du réacteur, dans la partie inférieure de la troisième couche granulaire C.

L'affluent d'eau à traiter était introduit de bas en haut du réacteur par la canalisation 3 ; l'eau épurée était évacuée par surverse en 4 dans le haut du réacteur ou, selon une variante, par la canalisation 5 située juste au-dessous du niveau supérieur de la couche C de shiste. L'eau de lavage du filtre était envoyée par la tubulure 6 alors que la canalisation 7 figure l'évacuation des chasses périodiques d'eau, de haut en bas du filtre, par l'eau contenue dans ce dernier pour éliminer partiellement la biomasse.

A) Selon une première série d'essais, on a traité une eau résiduaire urbaine (affluent arrivant par 3), dégrillée et désablée, de caractéristiques :
DCO : 550 à 650 mg/l
DBO : 200 à 250 mg/l
MES : 250 à 350 mg/l (matières en suspension)

Les conditions générales de fonctionnement étaient les suivantes :
- vitesse d'eau ascendante à traiter : 2 m/h
- vitesse de l'air injecté en 8 : 6 à 9 m/h
- charge appliquée : 14 kg DCO/m³ de matériau/jour
- chasse d'eau (purge) pendant 4 à 5 secondes de haut en bas du filtre, toutes les 6 heures environ, ce qui correspondait à environ 1 % de la production d'eau épurée ;
- lavage ascendant du filtre toutes les 48 h environ avec des vitesses d'air de 40 m/h et d'eau : 80 m/h environ, puis rinçage à l'eau à 80 m/h environ, la durée totale des lavages et rinçages étant de 10 minutes environ.

Un tel traitement d'eau brute, selon le procédé de l'invention, a permis d'obtenir une eau épurée dont la DCO était tombée à 80 mg/l alors que les M.E.S. chutaient à 25 mg/l.

En variante, au cours de quelques essais, on a introduit une deuxième raquette d'air au niveau indiqué par la flèche 9 et constaté que l'on obtenait, dans certains cas, des résultats légèrement améliorés.

A titre illustratif, on a indiqué dans le tableau 1 ci-après les effets obtenus dans la seule zone anaérobie X au cours de traitements effectués comme il est indiqué ci-avant ; dans ce tableau, tous les chiffres indiqués correspondent à des mg/l.

Tableau 1

|  | Eau brute | Eau issue de la zone anaérobie (ou acidogène) |
|---|---|---|
| DCO totale | 550 | 330 |
| DCO dissoute | 280 | 230 |
| M.E.S. | 260 | 90 |
| N (de NH₃) | 42 | 45 |
| P total | 11 | 10,8 |
| Orthophosphates | 8,5 | 12,9 |
| Acides gras volatils | 12 | 55 |

Comme on peut le constater, dans la zone anaérobie et sans dépense énergétique d'aération, on retient déjà environ 40 % de la DCO, 65 % des M.E.S. (une décantation primaire en éliminant au mieux 50 %) ; en outre, l'amoniac augmente légèrement par minéralisation de l'azote organique, la part orthophosphate du phosphore total a augmenté ; et, surtout, une part importante de la pollution organique a été transformée en acides gras volatils.

B) Conformément à une autre série d'expérimentations, on a visé comme objectif le traitement, également, de l'azote de l'ammoniac par nitrification simple du NH₃.

On a opéré dans le réacteur illustré, avec le même type de lit granulaire mais avec une hauteur de lit de 3m (au lieu de 2 précédemment) dont la troisième couche fine de 2m au lieu de 1 m. Les conditions générales étaient les mêmes que pour l'exemple 1 mais avec les données suivantes :
- dans l'eau brute : DCO : 600 mg/l
N (de NH₃) : 30 mg/l
- charge appliquée en DCO : 10 kg/m³ de lit/jour
- charge en N de NH³ : 0,48 kg/m³ de lit/jour
- vitesse de l'eau brute ascendante : 2m/h
- vitesse de l'air raquette (2) : 17m/h

L'eau traitée présentait les caractéristiques ci-dessous :
DCO : 60 mg/l
N (de NH₃) : 5 mg/l
N (de NO₃) : 14 mg/l

**Revendications**

1. Procédé pour la purification, par voie biologique, d'eaux résiduaires selon le principe du lit immergé et fixe de matériaux granulaires avec aération au moins partielle de la biomasse et injection de l'eau à traiter de bas en haut à travers la masse de matériau granulaire, caractérisé en ce que l'on opère dans un seul réacteur de filtration comprenant une zone inférieure d'anaérobie et une zone supérieure aérobie, séparées par une injection de gaz oxygéné, le filtre comprenant de bas en haut: une première couche de granulométrie entre 20 et 60 mm sur une hauteur d'au moins 15 cm, une deuxième couche de granulométrie entre 6 et 10 mm sur une hauteur d'au moins 40 cm, et une couche supérieure de granulométrie entre 1 et 4 mm sur une hauteur d'au moins 50 cm.

2. Procédé selon la revendication 1, caractérisé en ce que, en cours de traitement, la biomasse en excès est éliminée par chasse brutale, de haut en bas, de l'eau contenue dans le lit filtrant, pour obtenir un rapport optimum entre la pollution entrante (DCO) et la biomasse active.

3. Procédé selon l'une quelconque des revendications 1 et 2, caractérisé en ce que du gaz oxygéné est envoyé par intermittence en bas du filtre en vue de réduire le taux de phosphore de l'effluent traité.

4. Procédé selon l'une quelconque des revendications 1 à 3, caractérisé en ce que l'on ajoute à l'eau à traiter un agent coagulant, avant l'entrée ascendante dans le réacteur.

5. Procédé selon l'une quelconque des revendications 1 à 4, caractérisé en ce que l'on procède périodiquement à des lavages par courants d'air et eau à des vitesses de 25 à 100 m/h puis à un rinçage final par l'eau épurée à vitesse de 20 à 120 m/h.

6. Procédé selon l'une quelconque des revendications 1 à 5, caractérisé en ce que le matériau granulaire comprend, outre une couche inférieure de cailloux d'une hauteur de 20 à 40 cm servant de support, au moins l'un des produits choisis dans le groupe constitué par: schistes, argiles, charbon actif, sable, matériaux plastiques expansés, les densités desdits produits pouvant être supérieures ou inférieures à celles de l'eau.

## Patentansprüche

1. Verfahren zur biologischen Reinigung des Abwassers nach dem Prinzip des eingetauchten und festen Bettes von gekörnten Materialien mit zumindest Teilbelüftung der Biomasse und Einspritzung des zu behandelnden Wassers von unten nach oben durch die Masse des gekörnten Materials dadurch gekennzeichnet, daß man nur einen einzigen Filterreaktor betätigt, der einen unteren Anaerobienbereich und einen oberen Anaerobienbereich aufweist, wobei beide Bereiche durch eine Einspritzung von sauerstoffhaltigem Gas getrennt sind und wobei der Filter von unten nach oben eine erste Granulometrieschicht von 20 bis 60 mm auf einer Höhe von mindestens 15 cm, eine zweite Granulometrieschicht von 6 bis 10 mm auf einer Höhe von mindestens 40 cm und eine obere Granulometrieschicht von 1 bis 4 mm auf einer Höhe von mindestens 50 cm beinhaltet.

2. Verfahren nach Anspruch 1 dadurch gekennzeichnet, daß die überschüssige Biomasse im Lauf der Behandlung durch heftigen Stoß von oben nach unten von dem im Filterbett befindlichen Wasser getrennt wird, um ein optimales Verhältnis zwischen dem eingehenden Schmutz (DCO) und der aktiven Biomasse zu erzielen.

3. Verfahren nach irgendeinem der Ansprüche 1 und 2 dadurch gekennzeichnet, daß sauerstoffhaltiges Gas mit Unterbrechungen unten am Filter geführt wird, um den Phosphorgehalt des behandelten Abwassers zu reduzieren.

4. Verfahren nach irgendeinem der Ansprüche 1 bis 3 dadurch gekennzeichnet, daß man dem zu behandelnden Wasser ein Koagulationsmittel vor dem steigenden Eingang in den Reaktor zusetzt.

5. Verfahren nach irgendeinem der Ansprüche 1 bis 4 dadurch gekennzeichnet, daß man in regelmäßigen Abständen mit Luft und Wasser bei 25 bis 100 m/h wäscht und dann durch das gereinigte Wasser bei 20 bis 120 m/h endspült.

6. Verfahren nach irgendeinem der Ansprüche 1 bis 5 dadurch gekennzeichnet, daß das gekörnte Material außer einer Unterschicht aus Steinen auf eine Höhe von 20 bis 40 cm als Träger, mindestens ein Produkt aus den gewählten Produkten in der aus Schiefer, Ton, Aktivkohle, Sand, expandierter Kunststoff beinhaltet, wobei die Dichten der genannten Produkte höher oder niedriger als die Dichten des Wassers sein können.

## Claims

1. Process for biologically purifying sewage according the principle of the immersed and fixed bed for granular materials with at least partial aeration of the biomass and injection of the water to be treated upwardly through the mass of granular material, characterized in that it is performed in a single filtration reactor comprising a lower anaerobic zone and an upper aerobic zone, separated by an injection of oxygenated gas, the filter containing upwards: a first layer having a grain size of between 20 mm and 60 mm over a height of at least 15 cm; a second layer having a grain size of between 6 mm and 10 mm over a height of last 40 cm, and an upper layer having a grain size from 1 mm to 4 mm over a height of at least 50 cm.

2. Process according the claim 1, wherein, during treatment, excess biomass is eliminated by sudden downward flushings of water contained in the filtering bed so as to obtain an optimal ratio between the entering pollution (COD) and the active biomass.

3. Process according anyone of the claims 1 and 2, wherein oxygenated gas is sent intermittently into the bottom of the filter to reduce the level of phosphorus of the treated effluent.

4. Process according anyone of the claims 1 to 3, characterized in that a coagulating agent is added to the water to be treated prior to ascending entry into the reactor.

5. Process recording anyone of the claims 1 to 4, wherein washings with currents of air and water at speeds from 25 to 100 meters/hour and a final rinsing with purified water at a speed of from 20 to 120 meters/hour are performed periodically.

6. Process according anyone of the claims 1 to 5, wherein the granular material comprises, beyond a lower layer of pebbles acting as a support over a height of 20 to 40 cm, at least one product selected from the group consisting of: shists, clays, activated carbon, sand, expanded plastic materials, the density of these products being higher or lower to the density of the water.